(19)

**Europäisches Patentamt**
**European Patent Office**
**Office européen des brevets**

(11) **EP 3 261 094 A1**

(12) **EUROPEAN PATENT APPLICATION**

(43) Date of publication:
**27.12.2017 Bulletin 2017/52**

(51) Int Cl.:
**H01B 3/44** *(2006.01)* **C08L 23/06** *(2006.01)*
**C08L 23/08** *(2006.01)*

(21) Application number: **16175586.3**

(22) Date of filing: **21.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Borealis AG**
**1220 Vienna (AT)**

(72) Inventors:
• **HAGSTRAND, Per-Ola**
  **444 46 Stenungsund (SE)**
• **GKOURMPIS, Thomas**
  **412 64 Göteborg (SE)**

(74) Representative: **Campbell, Neil Boyd**
**Dehns**
**St Bride's House**
**10 Salisbury Square**
**London**
**EC4Y 8JD (GB)**

(54) **CABLE WITH ADVANTAGEOUS ELECTRICAL PROPERTIES**

(57) A cable comprising one or more conductors surrounded by at least an inner semiconductive layer, an insulation layer and an outer semiconductive layer, in that order, wherein said insulation layer comprises an LDPE homopolymer or copolymer having a density of 927 to 940 $kg/m^3$ and wherein the conductivity of the LDPE is 5.0 fS/m or less when measured according to DC conductivity method as described under "Determination Methods".

EP 3 261 094 A1

**Description**

This invention relates to the use of certain low density polyethylene (LDPE) polymers in the insulation layers of cables, such as DC cables. In particular, the invention relates to the use of LDPEs which have unusually high density which surprisingly enable the formation of cable insulation layers with remarkably low conductivity. The LDPE of the invention is ideally used in non-crosslinked form thus avoiding the need for a crosslinking agent to be present and avoiding the need for a post crosslinking degassing procedure to remove crosslinking agent by-products.

**Background**

Polyolefins produced in a high pressure (HP) process are widely used in demanding polymer applications where the polymers must meet high mechanical and/or electrical requirements. For instance in power cable applications, particularly in medium voltage (MV) and especially in high voltage (HV) and extra high voltage (EHV) cable applications, the electrical properties of the polymer composition used in the cable has significant importance. Furthermore, the electrical properties of importance may differ in different cable applications, as is the case between alternating current (AC) and direct current (DC) cable applications.

A typical power cable comprises a conductor surrounded, at least, by an inner semiconductive layer, an insulation layer and an outer semiconductive layer, in that order. The cables are commonly produced by extruding the layers on a conductor.

The polymer material in one or more of said layers is often crosslinked to improve e.g. heat and deformation resistance, creep properties, mechanical strength, chemical resistance and abrasion resistance. During the crosslinking reaction, crosslinks (bridges) are primarily formed. Crosslinking can be effected using e.g. a free radical generating compound which are typically incorporated into the layer material prior to the extrusion of the layer(s) on a conductor. After formation of the layered cable, the cable is then subjected to a crosslinking step to initiate the radical formation and thereby crosslinking reaction.

Peroxides are very commonly used as free radical generating compounds. The resulting decomposition products of peroxides may include volatile by-products which are often undesired, since e.g. may have a negative influence on the electrical properties of the cable. Therefore the volatile decomposition products such as methane are conventionally reduced to a minimum or removed after crosslinking and cooling step. Such removal step, generally known as a degassing step, is time and energy consuming causing extra costs.

Cross-linked high pressure LDPE has been used for extruded HVDC cables for about 15 years. The latest products developed are approved for 640 kV cables. The industry however is demanding even higher voltages. In ordered reach even higher voltage levels, insulation materials with even lower electrical conductivity will most likely be needed to prevent thermal runaway.

The DC electrical conductivity is therefore an important material property for insulating materials. First of all, the strong temperature and electric field dependence of this property will influence the electric field. The second issue is the fact that heat will be generated inside the insulation by the electric leakage current flowing between the inner and outer semiconductive layers. This leakage current depends on the electric field and the electrical conductivity of the insulation. High conductivity of the insulating material can even lead to thermal runaway under high stress/high temperature conditions. The conductivity must therefore be sufficiently low to avoid thermal runaway.

Accordingly, in HV DC cables, the insulation is heated by the leakage current. For a specific cable design the heating is proportional to the insulation conductivity $\times$ (electrical field)$^2$. Thus, if the voltage is increased, far more heat will be generated.

Our invention seeks to minimise the conductivity of insulation layer, ideally whilst avoiding the problems associated with crosslinking and subsequent degassing. Our solution is that certain LDPEs offer remarkably low conductivity measurements even without crosslinking.

The LDPE of use in the invention is not itself new and it has been previously proposed in the literature. For example, Borealis grade LE6609-PH is suitable for use in the present invention and has previously been suggested for use in household packaging solutions and medical solutions in the field of blow moulding.

Moreover, the possibility of using non cross-linked LDPE in the insulation layer of a cable is not new. In WO2011/113685, LDPE of density 922 kg/m$^3$ and MFR$_2$ 1.90 g/10min is suggested for use in the insulation layer of a cable but the conductivity of that material is disappointing and '685 suggests that a variety of low pressure polymers such as polypropylenes are a better alternative when the polymer composition is not cross-linked.

There are high demands to increase the voltage of a power cable, particularly of a direct current (DC) power cable, and thus a continuous need to find alternative polymers with reduced conductivity. Such polymers should also give good mechanical properties required for demanding power cable embodiments.

It is desirable if low conductivity insulation layer materials can be formed from LDPE as opposed to polymers made at low pressure using conventional organometallic catalysis. LDPE tends to be a "cleaner" polymer and any impurities are a significant problem within an insulation layer as these lead to defects and potential water trees. Low pressure polyethylenes contain catalyst residues which can potentially cause electric breakdown, and initiate water trees. As voltages increase, the problem of impurities is exacerbated and hence LDPE is therefore the ideal base material for insulation layers for cables and is favoured over polymers made in low pressures processes such as LLDPE. Thus, to find LDPE materials with lower conductivity compared to those used today, would be of great value.

The inventors have now found that certain LDPEs offer remarkably low conductivity and can be used to prepare, for example, the insulation layer in a direct current (DC) power cable layer and enable cables that operate at voltages higher than possible today. Moreover, the LDPE of the invention has a remarkably high melting point. The higher melting point is an advantage as it offers the possibility to increase the service temperature of HVDC cables leading to higher transmission capacity.

**Summary of Invention**

Thus viewed from one aspect the invention provides a cable comprising one or more conductors surrounded by at least an inner semiconductive layer, an insulation layer and an outer semiconductive layer, in that order, wherein said insulation layer comprises an LDPE homopolymer or copolymer having a density of 927 to 940 kg/m$^3$ and wherein the conductivity of the insulation layer is 5.0 fS/m or less when measured according to DC conductivity method as described under "Determination Methods".

Alternatively viewed, the invention provides a cable comprising one or more conductors surrounded by at least an inner semiconductive layer, an insulation layer and an outer semiconductive layer, in that order, wherein said insulation layer comprises an LDPE homopolymer or copolymer having a density of 927 to 940 kg/m$^3$ and wherein the conductivity of the LDPE is 5.0 fS/m or less when measured according to DC conductivity method as described under "Determination Methods".

In another embodiment, the invention provides a cable comprising one or more conductors surrounded by at least an inner semiconductive layer, an insulation layer and an outer semiconductive layer, in that order, wherein said insulation layer comprises an LDPE homopolymer or copolymer having a melting point of at least 112°C and wherein the conductivity of the insulation layer is 5.0 fS/m or less when measured according to DC conductivity method as described under "Determination Methods".

In another embodiment, the invention provides a cable comprising one or more conductors surrounded by at least an inner semiconductive layer, an insulation layer and an outer semiconductive layer, in that order, wherein said insulation layer comprises an LDPE homopolymer or copolymer having a melting point of at least 112°C and wherein the conductivity of the LDPE is 5.0 fS/m or less when measured according to DC conductivity method as described under "Determination Methods".

Viewed from another aspect the invention provides a cable comprising one or more conductors surrounded by at least an inner semiconductive layer, an insulation layer and an outer semiconductive layer, in that order, wherein said insulation layer is not crosslinked and comprises an LDPE homopolymer or copolymer having a density of 927 to 940 kg/m$^3$ and wherein the conductivity of the LDPE or the insulation layer is 5.0 fS/m or less when measured according to DC conductivity method as described under "Determination Methods".

In particular the cable of the invention is a direct current (DC) power cable, preferably operating at or capable of operating at 650 kV or more.

Viewed from another aspect the invention provides a process for producing a cable comprising the steps of:

- applying on one or more conductors, preferably by (co)extrusion, an inner semiconductive layer, an insulation layer and an outer semiconductive layer, in that order, wherein the insulation layer comprises wherein an LDPE homopolymer or copolymer having a density of 927 to 940 kg/m$^3$ and wherein the conductivity of the LDPE or the insulation layer is 5.0 fS/m or less when measured according to DC conductivity method as described under "Determination Methods". Preferably the insulation layer is not crosslinked.

Viewed from another aspect the invention provides the use of an LDPE homopolymer or copolymer having a density of 927 to 940 kg/m$^3$ in the manufacture of an insulation layer in a cable, wherein the conductivity of the LDPE or the insulation layer is 5.0 fS/m or less when measured according to DC conductivity method as described under "Determination Methods".

In an especially preferred embodiment, the invention provides a cable comprising one or more conductors surrounded by at least an inner semiconductive layer, an insulation layer and an outer semiconductive layer, in that order, wherein said insulation layer comprises at least 99 wt% of a LDPE homopolymer having a density of 929 to 932 kg/m$^3$ and wherein the conductivity of the LDPE or the insulation layer is 5.0 fS/m or less when measured according to DC conductivity method as described under "Determination Methods".

**Definitions**

The term LDPE is used to define a polyethylene polymer that is produced in a high pressure process. The term LDPE used herein describes and distinguishes a high pressure polyethylene from polyethylenes produced in the presence of an olefin polymerisation catalyst. LDPEs have certain typical features, such as different branching architecture. The density of the LDPE of the invention is 927 to 940 kg/m$^3$. It will be appreciated that this range is relatively high for an "LDPE" and represents a density range often associated with MDPE. In view of the polymer architecture however, throughout the draft the term LDPE will be used to define the polymers of the invention having a density of 927 to 940 kg/m$^3$.

The LDPE also has a very high melting point.

**Detailed Description of Invention**

The present invention requires the use of a particular LDPE polymer in the insulation layer of a cable, especially a power cable such as a direct current (DC) power cable. Unexpectedly, the "high density" LDPE of the invention has advantageous electrical properties. In particular, the LDPE polymer of the invention enables the formation of an insulation layer that has reduced, i.e. low, electrical conductivity. "Reduced" or "low" electrical conductivity as used herein interchangeably means that the value obtained from the DC conductivity measurement as defined below under "Determination methods" is low, i.e. reduced. Low electrical conductivity is beneficial for minimising undesired heat formation in the insulation layer of a cable.

Moreover and unexpectedly, the LDPE polymer of the invention and hence the insulation layer of the cable of the invention has low electrical conductivity without the need for crosslinking. Furthermore, the non-crosslinked polymer still possesses the mechanical properties needed for an insulation layer of a cable, preferably a DC power cable, such as low flex modulus, ideal tensile modulus, and good stress crack.

The low density polyethylene, LDPE, of the invention is a polyethylene produced in a high pressure process. Typically the polymerization of ethylene and optional further comonomer(s) in a high pressure process is carried out in the presence of an initiator(s). The meaning of the term LDPE is well known and documented in the literature. The term LDPE describes and distinguishes a high pressure polyethylene from polyethylenes produced in the presence of an olefin polymerisation catalyst. LDPEs have certain typical features, such as different branching architecture.

**LDPE homopolymer or copolymer**

The LDPE polymer of the invention is one having a high density. The density of LDPE polymer is 927 to 940 kg/m$^3$, preferably 928 to 935 kg/m$^3$, especially 929 to 932 kg/m$^3$, such as about 930 kg/m$^3$.

The MFR$_2$ (2.16 kg, 190°C) of the LDPE polymer is preferably from 0.05 to 30.0 g/10 min, more preferably is from 0.1 to 20 g/10min, and most preferably is from 0.1 to 10 g/10min, especially 0.1 to 2.0 g/10min. In a particularly preferred embodiment, the MFR$_2$ of the LDPE may range from 0.1 to 2.0 g/10min, preferably 0.1 to 1.0 g/10min, especially 0.1 to 0.5 g/lOmin. These MFR$_2$ values reflect a high molecular weight for the LDPE. Uncrosslinked LDPE often exhibits poor stress crack resistance (for example measured by the PENT test). In order to make LDPE work better as an insulation material, relatively high molecular weight is preferred.

The LDPE may have a tensile modulus (1 mm/min ISO527-2) of at least 300 MPa, such as at least 325 MPa. Values up to 600 MPa are possible.

The LDPE may have a flex modulus (ISO178) of at least 300 MPa, such as at least 320 MPa. Values up to 600 MPa are possible.

The LDPE may be a low density homopolymer of ethylene (referred herein as LDPE homopolymer) or a low density copolymer of ethylene with one or more comonomer(s) (referred herein as LDPE copolymer). Where the insulation layer remains non crosslinked it is preferred if the LDPE is a homopolymer. Where the insulation layer is crosslinked, it is preferred if the LDPE is a LDPE copolymer, especially an unsaturated LDPE copolymer, such as an LDPE comprising a diene comonomer, e.g. an octadiene comonomer.

The one or more comonomers of the LDPE copolymer are preferably selected from the polar comonomer(s), non-polar comonomer(s) or from a mixture of the polar comonomer(s) and non-polar comonomer(s). Moreover, said LDPE homopolymer or LDPE copolymer may optionally be unsaturated.

As a polar comonomer for the LDPE copolymer, comonomer(s) containing hydroxyl group(s), alkoxy group(s), carbonyl group(s), carboxyl group(s), ether group(s) or ester group(s), or a mixture thereof, can be used. More preferably, comonomer(s) containing carboxyl and/or ester group(s) are used as said polar comonomer. Still more preferably, the polar comonomer(s) of LDPE copolymer is selected from the groups of acrylate(s), methacrylate(s) or acetate(s), or any mixtures thereof.

If present in said LDPE copolymer, the polar comonomer(s) is preferably selected from the group of alkyl acrylates, alkyl methacrylates or vinyl acetate, or a mixture thereof. Further preferably, said polar comonomers are

selected from $C_1$- to $C_6$-alkyl acrylates, $C_1$-to $C_6$-alkyl methacrylates or vinyl acetate. Still more preferably, said LDPE copolymer is a copolymer of ethylene with $C_1$- to $C_4$-alkyl acrylate, such as methyl, ethyl, propyl or butyl acrylate, or vinyl acetate, or any mixture thereof.

As the non-polar comonomer(s) for the LDPE copolymer, comonomer(s) other than the above defined polar comonomers can be used. Preferably, the non-polar comonomers are other than comonomer(s) containing hydroxyl group(s), alkoxy group(s), carbonyl group(s), carboxyl group(s), ether group(s) or ester group(s). One group of preferable non-polar comonomer(s) comprise, preferably consist of, monounsaturated (= one double bond) comonomer(s), preferably olefins, preferably alpha-olefins, more preferably $C_3$ to $C_{10}$ alpha-olefins, such as propylene, 1-butene, 1-hexene, 4-methyl-1-pentene, styrene, 1-octene, 1-nonene; polyunsaturated (= more than one double bond) comonomer(s); a silane group containing comonomer(s); or any mixtures thereof. The polyunsaturated comonomer(s) are further described below in relation to unsaturated LDPE copolymers.

If the LDPE polymer is a copolymer, it preferably comprises 0.001 to 35 wt.-%, still more preferably less than 30 wt.-%, more preferably less than 25 wt.-%, of one or more comonomer(s). Preferred ranges include 0.5 to 10 wt%, such as 0.5 to 5 wt% comonomer.

The LDPE polymer, may optionally be unsaturated, i.e. may comprise carbon-carbon double bonds (-C=C-). Preferred "unsaturated" LDPEs contains carbon-carbon double bonds/1000 carbon atoms in a total amount of at least 0.4/1000 carbon atoms. If a non-crosslinked LDPE is used in the final cable, then the LDPE is typically not unsaturated as defined above. By not unsaturated is meant that the C=C content is preferably less than 0.2/1000 carbon atoms, such as 0.1/1000C atoms or less.

As well known, the unsaturation can be provided to the LDPE polymer by means of the comonomers, a low molecular weight (Mw) additive compound, such as a crosslinking booster, CTA or scorch retarder additive, or any combinations thereof. The total amount of double bonds means herein double bonds added by any means. If two or more above sources of double bonds are chosen to be used for providing the unsaturation, then the total amount of double bonds in the LDPE polymer means the sum of the double bonds present. Any double bond measurements are carried out prior to optional crosslinking.

The term "total amount of carbon-carbon double bonds" refers to the combined amount of double bonds which originate from vinyl groups, vinylidene groups and *trans*-vinylene groups, if present.

If an LDPE homopolymer is unsaturated, then the unsaturation can be provided e.g. by a chain transfer agent (CTA), such as propylene, and/or by polymerization conditions. If an LDPE copolymer is unsaturated, then the unsaturation can be provided by one or more of the following means: by a chain transfer agent (CTA), by one or more polyunsaturated comonomer(s) or by polymerisation conditions. It is well known that selected polymerisation conditions such as peak temperatures and pressure, can have an influence on the unsaturation level. In case of an unsaturated LDPE copolymer, it is preferably an unsaturated LDPE copolymer of ethylene with at least one polyunsaturated comonomer, and optionally with other comonomer(s), such as polar comonomer(s) which is preferably selected from acrylate or acetate comonomer(s). More preferably an unsaturated LDPE copolymer is an unsaturated LDPE copolymer of ethylene with at least polyunsaturated comonomer(s).

The polyunsaturated comonomers suitable for the unsaturated second polyolefin (b) preferably consist of a straight carbon chain with at least 8 carbon atoms and at least 4 carbons between the non-conjugated double bonds, of which at least one is terminal, more preferably, said polyunsaturated comonomer is a diene, preferably a diene which comprises at least eight carbon atoms, the first carbon-carbon double bond being terminal and the second carbon-carbon double bond being non-conjugated to the first one. Preferred dienes are selected from $C_8$ to $C_{14}$ non-conjugated dienes or mixtures thereof, more preferably selected from 1,7-octadiene, 1,9-decadiene, 1,11-dodecadiene, 1,13-tetradecadiene, 7-methyl-1,6-octadiene, 9-methyl-1,8-decadiene, or mixtures thereof. Even more preferably, the diene is selected from 1,7-octadiene, 1,9-decadiene, 1,11-dodecadiene, 1,13-tetradecadiene, or any mixture thereof, however, without limiting to above dienes.

It is well known that e.g. propylene can be used as a comonomer or as a chain transfer agent (CTA), or both, whereby it can contribute to the total amount of the carbon-carbon double bonds, preferably to the total amount of the vinyl groups. Herein, when a compound which can also act as comonomer, such as propylene, is used as CTA for providing double bonds, then said copolymerisable comonomer is not calculated to the comonomer content.

If LDPE polymer is unsaturated, then it has preferably a total amount of carbon-carbon double bonds, which originate from vinyl groups, vinylidene groups and *trans*-vinylene groups, if present, of more than 0.4/1000 carbon atoms, preferably of more than 0.5/1000 carbon atoms. The upper limit of the amount of carbon-carbon double bonds present in the polyolefin is not limited and may preferably be less than 5.0/1000 carbon atoms, preferably less than 3.0/1000 carbon atoms.

In some embodiments, e.g. wherein higher crosslinking level with the low peroxide content is desired, the total amount of carbon-carbon double bonds, which originate from vinyl groups, vinylidene groups and *trans*-vinylene groups, if present, in the unsaturated LDPE, is preferably higher than 0.40/1000 carbon atoms, preferably higher than 0.50/1000 carbon atoms, preferably higher than 0.60/1000 carbon atoms.

If the LDPE is unsaturated LDPE as defined above, it contains preferably at least vinyl groups and the total amount of vinyl groups is preferably higher than 0.05/1000 carbon atoms, still more preferably higher than 0.08/1000 carbon atoms, and most preferably of higher than 0.11/1000 carbon atoms. Preferably, the total amount of vinyl groups is of lower than 4.0/1000 carbon atoms. More preferably, the second polyolefin (b), prior to crosslinking, contains vinyl groups in total amount of more than 0.20/1000 carbon atoms, still more preferably of more than 0.30/1000 carbon atoms.

It is however preferred if the LDPE of the invention is not unsaturated and possesses less than 0.2 C=C/1000 C atoms.

The LDPE polymer of the invention has a high melting point, which may be of importance especially for a thermoplastic insulation material. Melting points of 112°C or more are envisaged, such as 114°C or more, especially 116°C or more, such as 112 to 125°C. As noted above, higher melting point is an advantage as it offers the possibility to increase the service temperature of HVDC cables leading to higher transmission capacity.

The LDPE polymer is produced at high pressure by free radical initiated polymerisation (referred to as high pressure (HP) radical polymerization). The HP reactor can be e.g. a well-known tubular or autoclave reactor or a mixture thereof, preferably a tubular reactor. The high pressure (HP) polymerisation and the adjustment of process conditions for further tailoring the other properties of the polyolefin depending on the desired end application are well known and described in the literature, and can readily be used by a skilled person. Suitable polymerisation temperatures range up to 400 °C, preferably from 80 to 350°C and pressure from 70 MPa, preferably 100 to 400 MPa, more preferably from 100 to 350 MPa. Pressure can be measured at least after compression stage and/or after the tubular reactor. Temperature can be measured at several points during all steps.

After the separation the obtained LDPE is typically in a form of a polymer melt which is normally mixed and pelletized in a pelletising section, such as pelletising extruder, arranged in connection to the HP reactor system. Optionally, additive(s), such as antioxidant(s), can be added in this mixer in a known manner.

Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

When an unsaturated LDPE copolymer of ethylene is prepared, then, as well known, the carbon-carbon double bond content can be adjusted by polymerising the ethylene e.g. in the presence of one or more polyunsaturated comonomer(s), chain transfer agent(s), or both, using the desired feed ratio between monomer, preferably ethylene, and polyunsaturated comonomer and/or chain transfer agent, depending on the nature and amount of C-C double bonds desired for the unsaturated LDPE copolymer. I.a. WO 9308222 describes a high pressure radical polymerisation of ethylene with polyunsaturated monomers. As a result the unsaturation can be uniformly distributed along the polymer chain in random copolymerisation manner.

It is low electrical conductivity makes the LDPE polymer of the invention very desirable for cable applications, especially DC cable applications.

The crystal lamella thickness of the LDPE is high (measured with DSC). Thicker crystal lamellas can contribute to lower conductivity.

Accordingly, in one preferable embodiment the LDPE comprises at least 3 wt%, preferably at least 5 wt%, more preferably from 10 to 100 wt%, even more preferably from 15 to 95 wt%, of crystals having a lamella thickness of at least 10 nm, when measured according to DSC method as described below under "Determination Methods".

In this context the above used definitions have the following meanings:

In this context the above used definitions have the following meanings:

"Lamella thickness" = Thickness of crystal lamellas in the material (fractions* < 0.1 wt% are ignored).

The LDPE also has a high level of crystallinity. This should be beneficial for mechanical performance. Values of 45% or more, such as 50 % or more are preferred.

The LDPE polymer preferably has an electrical conductivity of 5.0 fS/m or less, more preferably of 4.0 fS/m or less, more preferably of 3.0 fS/m or less, such as 0.01 to 5.0 fS/m, more preferably of 0.01 to 4.0 fS/m, more preferably of 0.05 to 3.5 fS/m, more preferably of 0.05 to 3.0 fS/m when measured according to DC conductivity method as described under "Determination Methods".

Alternatively viewed, the insulation layer of the cable of the invention has an electrical conductivity of 5.0 fS/m or less, more preferably of 4.0 fS/m or less, more preferably of 3.0 fS/m or less, such as 0.01 to 5.0 fS/m, more preferably of 0.01 to 4.0 fS/m, more preferably of 0.05 to 3.5 fS/m, more preferably of 0.05 to 3.0 fS/m when measured according to DC conductivity method as described under "Determination Methods".

The LDPE of the invention is not new. For example, Borealis grade LE6609-PH is suitable for use in the present invention.

**Cables**

The cable of the invention is preferably a DC cable. A DC power cable is defined to be a DC cable transferring energy operating at any voltage level, typically operating at voltages higher than 1 kV. The DC power cable can be a low voltage (LV), a medium voltage (MV), a high voltage (HV) or an extra high voltage (EHV) DC cable, which terms, as well known, indicate the level of operating voltage. The polymer is even more preferable used in the insulation layer for a DC power cable operating at voltages higher than 36 kV, such as a HV DC cable. For HV DC cables the operating voltage is defined herein as the electric voltage between ground and the conductor of the high voltage cable.

Preferably the HV DC power cable of the invention is one operating at voltages of 40 kV or higher, even at voltages of 50 kV or higher. More preferably, the HV DC power cable operates at voltages of 60 kV or higher. The invention is also highly feasible in very demanding cable applications and further cables of the invention are HV DC power cable operating at voltages higher than 70 kV. Voltages of 100 kV or more are targeted, such as 200 kV or more, more preferably 300 KV or more, especially 400 kV or more, more especially 500 kV or more. Voltages of 640KV or more, such as 700 kV are also envisaged. The upper limit is not limited. The practical upper limit can be up to 900 kV. The cables of the invention operate well therefore in demanding extra HV DC power cable applications operating 400 to 850 kV, such as 650 to 850 kV.

A cable, such as a DC cable, comprises an inner semiconductive layer comprising a first semiconductive composition, an insulation layer comprising the LDPE polymer of the invention and an outer semiconductive layer comprising a second semiconductive composition, in that order.

The LDPE polymer of the invention is used in the insulation layer of the cable. Ideally, the insulation layer comprises 95 wt% LDPE polymer of the invention or more such as 98 wt% LDPE or more, e.g. 99 wt% LDPE or more. It is preferred therefore if the LDPE of the invention is the only polymer component used in the insulation layer of the cables of the invention. Thus, it is preferred if the insulation layer consists essentially of the LDPE of the invention. The term consists essentially of is used herein to mean that the only polymer component present in the insulation layer is the LDPE. It will be appreciated that the insulation layer may contain standard polymer additives such as scorch retarders, water tree retarders, antioxidants and so on. These are not excluded by the term consists essentially of. Note also that these additives may be added as part of a masterbatch and hence carried on a polymer carrier. The use of masterbatch additives is not excluded by the term consists essentially of.

It is possible to use a mixture of LDPEs of the invention in the insulation layer. It is possible if the insulation layer comprises another polymer component although it is preferred if the LDPE of the invention still forms the major component present. If the insulation layer contains a polymer composition it may comprise the LDPE of the invention (a) in an amount of 50 to 99 wt%, preferably of 60 to 99 wt%, more preferably of 70 to 99 wt%, more preferably of 80 to 99 wt%, more preferably of 90 to 99 wt%, more preferably of 95 to 99 wt%, based on the combined weight of the LDPE (a) and an second polyolefin (b). The second polyolefin (b) preferably forms 1 to 50 wt% of the insulation layer, such as 1 to 40 wt%, preferably 1 to 30 wt%, more preferably 1 to 20 wt%, especially 1 to 10 wt% such as 1 to 5 wt%. Ideally, however the insulation layer comprises 100% of the LDPE of the invention (and any additives as mentioned herein).

Said polyolefin (b), if present can be selected from very low density polyethylene (VLDPE) copolymers, linear low density polyethylene (LLDPE) copolymers, medium density polyethylene (MDPE) copolymers or high density polyethylene (HDPE) homopolymers or copolymers well known in the art. Polyolefin (b) can be unimodal or multimodal with respect to molecular weight distribution.

According to another equally preferred embodiment, the polyolefin (b) is a propylene homopolymer, a random copolymer of propylene with one or more comonomer(s) or heterophasic copolymer of propylene with one or more comonomer(s).

More preferably, if present the second polyolefin (b) is a low density polyethylene (LDPE) polymer selected from an optionally unsaturated LDPE homopolymer or an optionally unsaturated LDPE copolymer of ethylene with one or more comonomer(s), said polyolefin (b) being different from the LDPE polymer of the invention. If present the LDPE (b) preferably has a density in the range of 915 to 926 kg/m$^3$.

In the preferred embodiment, the polyolefin (b), if present, is an LDPE selected from an optionally unsaturated LDPE homopolymer or an optionally unsaturated LDPE copolymer of ethylene with one or more comonomer(s) as defined above.

Most preferably therefore the insulation layer comprises no polyolefin (b) (0wt% of polyolefin (b)).

The insulation layer can have a beneficial low electrical conductivity when it is crosslinked with a crosslinking agent. The insulation layer of the cables of the invention can thus optionally be crosslinkable. It is however preferred if the insulation layer is not crosslinked.

The term crosslinkable means that the insulation layer can be crosslinked using a crosslinking agent before use. The insulation layer will need to comprise a crosslinking agent in order to be crosslinkable, typically a free radical generating agent. The crosslinked polymer composition has a typical network, i.a. interpolymer crosslinks (bridges), as well known in the field.

If the insulation layer is crosslinked, any parameter of the insulation layer is ideally measured before the crosslinked cable unless otherwise indicated. Crosslinking may contribute to the mechanical properties and the heat and deformation resistance of the polymer composition.

In embodiments, wherein the insulation layer comprises no crosslinking agent, the electrical conductivity as described under the "Determination method" is measured from a sample of polymer forming the insulation layer which is non-crosslinked (i.e. does not contain a crosslinking agent and has not been crosslinked with a crosslinking agent). In embodiments, wherein the insulation layer is crosslinked with a crosslinking agent, then the electrical conductivity is measured from a sample of the crosslinked polymer (i.e. a sample of the polymer is first crosslinked with the crosslinking agent initially present and then the electrical conductivity is measured from the obtained crosslinked sample). The conductivity measurement from a non-crosslinked or a crosslinked polymer composition sample is described under "Determination Methods".

The amount of the crosslinking agent used, if present, can vary, preferably within the ranges given below. Preferably a peroxide is used in an amount of 0 to 110 mmol -O-O-/kg polymer composition of the insulation layer, preferably 0 to 90 mmol -O-O-/kg polymer composition (corresponds 0 to 2.4 wt% of dicumyl peroxide based on the polymer composition), preferably of 0 to 37 mmol -O-O-/kg polymer composition, preferably of 0 to 35 mmol -O-O-/kg polymer composition, preferably of 0 to 34 mmol -O-O-/kg polymer composition, preferably of 0 to 33 mmol -O-O-/kg polymer composition, more preferably from 0 to 30 mmol -O-O-/kg polymer composition, more preferably from 0 to 20 mmol - O-O-/kg polymer composition, more preferably from 0 to 10.0 mmol -O-O-/kg polymer composition, more preferably from 0 to 7.0 mmol -O-O-/kg polymer composition, more preferably less than 5.0 mmol -O-O-/kg polymer composition, most preferably the polymer composition comprises no crosslinking agent (= 0wt% of added crosslinking agent). The insulation layer is thus ideally free of byproducts of the decomposition of the peroxide.

The lower limit of the crosslinking agent, if present, is not limited and can be at least 0.1 mmol -O-O-/kg polymer composition in the insulation layer, preferably at least 0.5 mmol -O-O-/kg polymer composition, more preferably at least 5.0 mmol -O-O-/kg polymer composition. The lower peroxide content can shorten the required degassing step of the produced and crosslinked cable, if desired.

The unit "mmol -O-O-/kg polymer composition" means herein the content (mmol) of peroxide functional groups per kg polymer composition, when measured from the polymer composition prior to crosslinking. For instance the 35 mmol -O-O-/kg polymer composition corresponds to 0.95 wt% of the well-known dicumyl peroxide based on the total amount (100 wt%) of the polymer composition.

Such polymer composition may comprise one type of peroxide or two or more different types of peroxide, in which case the amount (in mmol) of -O-O-/kg polymer composition, as defined above, below or in claims, is the sum of the amount of -O-O-/kg polymer composition of each peroxide type. As non-limiting examples of suitable organic peroxides, di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, butyl-4,4-bis(tert-butylperoxy)-valerate, 1,1-bis(tert-butylperoxy)-3,3,5-trimethylcyclohexane, tert-butylperoxybenzoate, dibenzoylperoxide, bis(tert butylperoxyisopropyl)benzene, 2,5-dimethyl-2,5-di(benzoylperoxy)hexane, 1,1-di(tert-butylperoxy)cyclohexane, 1,1-di(tert amylperoxy)cyclohexane, or any mixtures thereof, can be mentioned. Preferably, the peroxide is selected from 2,5-di(tert-butylperoxy)-2,5-dimethylhexane, di(tert-butylperoxyisopropyl)benzene, dicumylperoxide, tert-butylcumylperoxide, di(tert-butyl)peroxide, or mixtures thereof. Most preferably, the peroxide is dicumylperoxide.

However, in a preferred embodiment the insulation layer is not crosslinked. Thus it is preferred that the insulation layer comprises no crosslinking agent. The prior art drawbacks relating to the use of a crosslinking agent in cable layer can therefore be avoided. Naturally, the non crosslinked embodiment also simplifies the cable production process. As no crosslinking agent is required, the raw material costs are lower. Also, it is generally required to degas a cross-linked cable layer to remove the by-products of the peroxide after crosslinking. Where the material is not crosslinked, no such degassing step is required.

The insulation layer may contain, in addition to the LDPE polymer, and optional second polyolefin (b) and the optional peroxide, further component(s) such as additives (such as any of antioxidant(s), scorch retarder(s) (SR), crosslinking booster(s), stabiliser(s), processing aid(s), flame retardant additive(s), water tree retardant additive(s), acid or ion scavenger(s), inorganic filler(s) and voltage stabilizer(s), as known in the polymer field.

The insulation layer may therefore comprise conventionally used additive(s) for W&C applications, such as one or more antioxidant(s) and optionally one or more scorch retarder(s), preferably at least one or more antioxidant(s). The used amounts of additives are conventional and well known to a skilled person, e.g. 0.1 to 1.0 wt%.

As non-limiting examples of antioxidants e.g. sterically hindered or semi-hindered phenols, aromatic amines, aliphatic sterically hindered amines, organic phosphites or phosphonites, thio compounds, and mixtures thereof, can be mentioned.

Preferably, the insulation layer does not comprise a carbon black. Also preferably, the insulation layer does not comprise flame retarding additive(s), e.g. a metal hydroxide containing additives in flame retarding amounts.

The cable of the invention also contains inner and outer semiconductive layers. These can be made of any conventional material suitable for use in these layers. The inner and the outer semiconductive compositions can be different or identical and may comprise a polymer(s) which is preferably a polyolefin or a mixture of polyolefins and a conductive filler, preferably carbon black. Suitable polyolefin(s) are e.g. polyethylene produced in a low pressure process or a polyethylene produced in a HP process (LDPE). The general polymer description as given above in relation to the polyolefin (b) applies also for the suitable polymers for semiconductive layers. The carbon black can be any conventional carbon black used in the semiconductive layers of a DC power cable, preferably in the semiconductive layer of a DC power cable. Preferably the carbon black has one or more of the following properties: a) a primary particle size of at least 5 nm which is defined as the number average particle diameter according ASTM D3849-95a, dispersion procedure D b) iodine number of at least 30 mg/g according to ASTM D1510, c) oil absorption number of at least 30 ml/100g which is measured according to ASTM D2414. Non-limiting examples of carbon blacks are e.g. acetylene carbon black, furnace carbon black and Ketjen carbon black, preferably furnace carbon black and acetylene carbon black. Preferably, the polymer composition comprises 10 to 50 wt% carbon black, based on the weight of the Semiconductive composition.

In a preferable embodiment, the outer semiconductive layer is cross-linked. In another preferred embodiment, the inner semiconductive layer is preferably non-crosslinked. Overall therefore it is preferred if the inner semiconductive layer and the insulation layer remain non crosslinked where the outer semiconductive layer is crosslinked. A peroxide crosslinking agent can therefore be provided in the outer semiconductive layer only.

The cable comprises one or more conductors containing, e.g. wires. Preferably the conductor is an electrical conductor and comprises one or more metal wires. Cu wire is preferred.

As well known the cable can optionally comprise further layers, e.g. screen(s), a jacketing layer(s), other protective layer(s) or any combinations thereof.

## Cable Manufacture

The invention also provides a process for producing a cable comprising the steps of - applying on a conductor, preferably by (co)extrusion, an inner semiconductive layer, an insulation layer and an outer semiconductive layer, in that order, wherein the insulation layer comprises wherein an LDPE homopolymer or copolymer having a density of 927 to 940 kg/m$^3$ and wherein the conductivity of the insulation layer is 5.0 fS/m or less when measured according to DC conductivity method as described under "Determination Methods". Preferably the insulation layer is not crosslinked.

The process may optionally comprise the steps of crosslinking one or both of the inner semiconductive layer or outer semiconductive layer, without crosslinking the insulation layer. Preferably, the outer semiconductive layer is crosslinked, without crosslinking the insulation layer. Also preferably, the inner semiconductive layer is not crosslinked. Thus, it is preferred if the semi-conductive layer comprises a peroxide which enables the crosslinking of the semi-conductive composition.

More preferably, a cable is produced, wherein the process comprises the steps of

(a)

- providing and mixing, preferably melt mixing in an extruder, an optionally crosslinkable first semiconductive composition comprising a polymer, a carbon black and optionally further component(s) for the inner semiconductive layer,
- providing and mixing, preferably melt mixing in an extruder, optionally crosslinkable low density polyethylene (LDPE) of the invention; and
- providing and mixing, preferably melt mixing in an extruder, a second semiconductive composition which is optionally crosslinkable and comprises a polymer, a carbon black and optionally further component(s) for the outer semiconductive layer,

(b) applying on one or more conductors, preferably by coextrusion,

- a melt mix of the first semiconductive composition obtained from step (a) to form the inner semiconductive layer,
- a meltmix of polymer composition of the invention obtained from step (a) to form the insulation layer, and
- a meltmix of the second semiconductive composition obtained from step (a) to form the outer semiconductive layer, and

(c) optionally crosslinking at crosslinking conditions one or both of the first semiconductive composition of the inner semiconductive layer and the second semiconductive composition of the outer semiconductive layer, of the obtained cable, and optionally crosslinking the insulation layer, more preferably without crosslinking the insulation layer.

Preferably in step (c) the second semiconductive polymer composition of the outer semiconductive layer is crosslinked, more preferably crosslinked without crosslinking the insulation layer. Also preferably, the second semiconductive polymer composition of the outer semiconductive layer is crosslinked, without crosslinking the insulation layer or the first semiconductive composition of the inner semiconductive layer.

Melt mixing means mixing above the melting point of at least the major polymer component(s) of the obtained mixture and is carried out for example, without limiting to, in a temperature of at least 15°C above the melting or softening point of polymer component(s).

The term "(co)extrusion" means herein that in case of two or more layers, said layers can be extruded in separate steps, or at least two or all of said layers can be coextruded in a same extrusion step, as well known in the art. The term "(co)extrusion" means herein also that all or part of the layer(s) are formed simultaneously using one or more extrusion heads. For instance a triple extrusion can be used for forming three layers. In case a layer is formed using more than one extrusion heads, then for instance, the layers can be extruded using two extrusion heads, the first one for forming the inner semiconductive layer and the inner part of the insulation layer, and the second head for forming the outer insulation layer and the outer semiconductive layer.

As well known, the polymer of the invention and the optional and preferred first and second semiconductive compositions can be produced before or during the cable production process.

Preferably, the polymers required to manufacture the cable of the invention are provided to the cable production process in form of powder, grain or pellets. Pellets mean herein generally any polymer product which is formed from reactor-made polymer (obtained directly from the reactor) by post-reactor modification to solid polymer particles.

Accordingly, the LDPE (a) and the optional second polyolefin (b), if present, of the polymer composition can be premixed, e.g. melt mixed together and pelletized, before mixing. Alternatively, and preferably, these components can be provided in separate pellets to the (melt) mixing step (a), where the pellets are blended together.

The (melt) mixing step (a) of the provided polymer composition of the invention and of the preferable first and second semiconductive compositions is preferably carried out in a cable extruder. The step a) of the cable production process may optionally comprise a separate mixing step, e.g. in a mixer arranged in connection and preceding the cable extruder of the cable production line. Mixing in the preceding separate mixer can be carried out by mixing with or without external heating (heating with an external source) of the component(s).

Any crosslinking agent can be added before the cable production process or during the (melt) mixing step (a). For instance, and preferably, the crosslinking agent and also the optional further component(s), such as additive(s), can already be present in the polymers used. The crosslinking agent is added, preferably impregnated, onto the solid polymer particles, preferably pellets.

It is preferred that the melt mix of the polymer composition obtained from (melt)mixing step (a) consists of the polyolefin (a) and optionally the second polyolefin (b), if present, of the invention as the sole polymer component(s). The optional and preferable additive(s) can be added to polymer composition as such or as a mixture with a carrier polymer, i.e. in a form of so-called master batch.

The optional crosslinking can be carried out at increased temperature which is chosen, as well known, depending on the type of crosslinking agent. For instance temperatures above 150°C, such as from 160 to 350°C, are typical, however without limiting thereto.

The processing temperatures and devices are well known in the art, e.g. conventional mixers and extruders, such as single or twin screw extruders, are suitable for the process of the invention.

The advantages of the most preferred embodiment of having the inner semiconductive layer and the insulation layer non-crosslinked in combination with an outer semiconductive layer which is crosslinked include:

- Optimal electrical performance of the insulation system of the HV DC cable,
- The connection of cables is very feasible due to non-crosslinked thermoplastic insulation composition,
- No need to wait and allow the heat to transfer through the insulation and inner semiconductive layers, since not crosslinked. The overall production efficiency is improved, especially in HV applications with thick insulation layer, since the inner semiconductive layer and the insulation layer need not to be crosslinked. Crosslinking of inner and outer semiconductive and insulation layers require typically at least 1 hour, while crosslinking of only the outer semiconductive layer takes less than 8 minutes,
- Robust high speed extrusion possible leading to longer stable production periods at higher extrusion speed and quality due to no risk to scorching (undesired premature crosslinking) in the inner semiconductive and insulation layers,
- Degassing step can be reduced, and thus accelerate the overall cable production process, since any undesired by-products, i.e. decomposition products, formed from the crosslinking agent, are easier to remove, i.e. degas, only from the outer layer,

- The crosslinked outer semiconductive layer is mechanically unexpectedly sufficient to protect the insulation layer from mechanical and thermal crack initiation, expressed as TSCR (Thermal stress cracking).

The thickness of the insulation layer of the cable, more preferably of the DC power cable such as HV DC power cable, is typically 2 mm or more, preferably at least 3 mm, preferably of at least 5 to 100 mm, more preferably from 5 to 50 mm, and conventionally 5 to 40 mm, e.g. 5 to 35 mm, when measured from a cross section of the insulation layer of the cable.

The thickness of the inner and outer semiconductive layers is typically less than that of the insulation layer, and in HV DC power cables can be e.g. more than 0.1 mm, such as from 0.3 up to 20 mm, 0.3 to 10 of inner semiconductive and outer semiconductive layer. The thickness of the inner semiconductive layer is preferably 0.3 - 5.0 mm, preferably 0.5 - 3.0 mm, preferably 0.8 - 2.0 mm. The thickness of the outer semiconductive layer is preferably from 0.3 to 10 mm, such as 0.3 to 5 mm, preferably 0.5 to 3.0 mm, preferably 0.8 - 3.0 mm. It is evident for and within the skills of a skilled person that the thickness of the layers of the DC cable depends on the intended voltage level of the end application cable and can be chosen accordingly.

The most interesting HVDC cables of the invention may have an insulation layer thickness of 20 mm or more, such as 20 to 40 mm. Service voltages above 320 kV are possible. Transmission capacities of above 1000 MW are also targeted.

The preferable embodiments of the LDPE of the invention and of the optional second polyolefin (b) can be combined with each other to further define the preferable embodiments of the invention.

## Determination methods

Unless otherwise stated in the description or experimental part the following methods were used for the property determinations.

**Wt%:** % by weight

## Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene and at 230 °C for polypropylene. MFR may be determined at different loadings such as 2.16 kg ($MFR_2$) or 21.6 kg ($MFR_{21}$).

## Molecular weight

Mz, Mw, Mn, and MWD are measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight; Mz is the z-average molecular weight) is measured according to ISO 16014-4:2003 and ASTM D 6474-99. A Waters GPCV2000 instrument, equipped with refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 μL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

## Comonomer contents

a) Comonomer content in random copolymer of polypropylene:

Quantitative Fourier transform infrared (FTIR) spectroscopy was used to quantify the amount of comonomer. Calibration was achieved by correlation to comonomer contents determined by quantitative nuclear magnetic resonance (NMR) spectroscopy.

The calibration procedure based on results obtained from quantitative $^{13}$C-NMR spectroscopy was undertaken in the conventional manner well documented in the literature.

The amount of comonomer (N) was determined as weight percent (wt%) via:

$$N = k1 \, (A / R) + k2$$

wherein A is the maximum absorbance defined of the comonomer band, R the maximum absorbance defined as peak height of the reference peak and with k1 and k2 the linear constants obtained by calibration. The band used for ethylene content quantification is selected depending if the ethylene content is random (730 cm$^{-1}$) or block-like (as in heterophasic PP copolymer) (720 cm$^{-1}$). The absorbance at 4324 cm$^{-1}$ was used as a reference band.

b) Quantification of alpha-olefin content in linear low density polyethylenes and low density polyethylenes by NMR spectroscopy:

The comonomer content was determined by quantitative 13C nuclear magnetic resonance (NMR) spectroscopy after basic assignment (J. Randall JMS - Rev. Macromol. Chem. Phys., C29(2&3), 201-317 (1989). Experimental parameters were adjusted to ensure measurement of quantitative spectra for this specific task.

Specifically solution-state NMR spectroscopy was employed using a Bruker AvanceIII 400 spectrometer. Homogeneous samples were prepared by dissolving approximately 0.200 g of polymer in 2.5 ml of deuterated-tetrachloroethene in 10 mm sample tubes utilising a heat block and rotating tube oven at 140 C. Proton decoupled 13C single pulse NMR spectra with NOE (powergated) were recorded using the following acquisition parameters: a flip-angle of 90 degrees, 4 dummy scans, 4096 transients an acquisition time of 1.6s, a spectral width of 20kHz, a temperature of 125 C, a bilevel WALTZ proton decoupling scheme and a relaxation delay of 3.0 s. The resulting FID was processed using the following processing parameters: zero-filling to 32k data points and apodisation using a gaussian window function; automatic zeroth and first order phase correction and automatic baseline correction using a fifth order polynomial restricted to the region of interest.

Quantities were calculated using simple corrected ratios of the signal integrals of representative sites based upon methods well known in the art.

c) Comonomer content of polar comonomers in low density polyethylene

(1) Polymers containing > 6 wt% polar comonomer units

Comonomer content (wt%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene ethyl acrylate, ethylene butyl acrylate and ethylene methyl acrylate. Film samples of the polymers were prepared for the FTIR measurement: 0.5-0.7 mm thickness was used for ethylene butyl acrylate and ethylene ethyl acrylate and 0.10 mm film thickness for ethylene methyl acrylate in amount of >6wt%. Films were pressed using a Specac film press at 150°C, approximately at 5 tons, 1-2 minutes, and then cooled with cold water in a not controlled manner. The accurate thickness of the obtained film samples was measured.

After the analysis with FTIR, base lines in absorbance mode were drawn for the peaks to be analysed. The absorbance peak for the comonomer was normalised with the absorbance peak of polyethylene (e.g. the peak height for butyl acrylate or ethyl acrylate at 3450 cm$^{-1}$ was divided with the peak height of polyethylene at 2020 cm$^{-1}$). The NMR spectroscopy calibration procedure was undertaken in the conventional manner which is well documented in the literature, explained below.

For the determination of the content of methyl acrylate a 0.10 mm thick film sample was prepared. After the analysis the maximum absorbance for the peak for the methylacrylate at 3455 cm$^{-1}$ was subtracted with the absorbance value for the base line at 2475 cm$^{-1}$ ($A_{methylacrylate} - A_{2475}$). Then the maximum absorbance peak for the polyethylene peak at 2660 cm$^{-1}$ was subtracted with the absorbance value for the base line at 2475 cm$^{-1}$ ($A_{2660} - A_{2475}$). The ratio between ($A_{methylacrylate} - A_{2475}$) and ($A_{2660} - A_{2475}$) was then calculated in the conventional manner which is well documented in the literature.

The weight-% can be converted to mol-% by calculation. It is well documented in the literature.

Quantification of copolymer content in polymers by NMR spectroscopy

The comonomer content was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

(2) Polymers containing 6 wt.% or less polar comonomer units

Comonomer content (wt.%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene butyl acrylate and ethylene methyl acrylate. For the FT-IR measurement a film samples of 0.05 to 0.12 mm thickness were prepared as described above under method 1). The accurate thickness of the obtained film samples was measured.

After the analysis with FT-IR base lines in absorbance mode were drawn for the peaks to be analysed. The maximum absorbance for the peak for the comonomer (e.g. for methylacrylate at 1164 $cm^{-1}$ and butylacrylate at 1165 $cm^{-1}$) was subtracted with the absorbance value for the base line at 1850 $cm^{-1}$ ($A_{polar\ comonomer}$ - $A_{1850}$). Then the maximum absorbance peak for polyethylene peak at 2660 $cm^{-1}$ was subtracted with the absorbance value for the base line at 1850 $cm^{-1}$ ($A_{2660}$ - $A_{1850}$). The ratio between ($A_{comonomer}$-$A_{1850}$) and ($A_{2660}$-$A_{1850}$) was then calculated. The NMR spectroscopy calibration procedure was undertaken in the conventional manner which is well documented in the literature, as described above under method 1).

The weight-% can be converted to mol-% by calculation. It is well documented in the literature.

Below is exemplified how polar comonomer content obtained from the above method (1) or (2), depending on the amount thereof, can be converted to micromol or mmol per g polar comonomer as used in the definitions in the text and claims:

The millimoles (mmol) and the micro mole calculations have been done as described below.

For example, if 1 g of the poly(ethylene-co-butylacrylate) polymer, which contains 20 wt% butylacrylate, then this material contains 0.20/$M_{butyiacrylate}$ (128 g/mol) = 1.56 x $10^{-3}$ mol. (=1563 micromoles).

The content of polar comonomer units in the polar copolymer $C_{polar\ comonomer}$ is expressed in mmol/g (copolymer). For example, a polar poly(ethylene-co-butylacrylate) polymer which contains 20 wt.% butyl acrylate comonomer units has a $C_{polar\ comonomer}$ of 1.56 mmol/g. The used molecular weights are: $M_{butylacrylate}$ = 128 g/mole, $M_{ethylacrylate}$ = 100 g/mole, $M_{methylacrylate}$ = 86 g/mole).

**Density**

Low density polyethylene (LDPE): The density was measured according to ISO 1183-2. The sample preparation was executed according to ISO 1872-2 Table 3 Q (compression moulding).

Low pressure process polyethylene: Density of the polymer was measured according to ISO 1183 / 1872-2B.

**Method for determination of the amount of double bonds in the Polymer Composition or in the polymer**

**A) Quantification of the amount of carbon-carbon double bonds by IR spectroscopy**

Quantitative infrared (IR) spectroscopy was used to quantify the amount of carbon-carbon doubles (C=C). Calibration was achieved by prior determination of the molar extinction coefficient of the C=C functional groups in representative low molecular weight model compounds of known structure.

The amount of each of these groups (N) was determined as number of carbon-carbon double bonds per thousand total carbon atoms (C=C/1000C) via:

$$N = (A \times 14) / (E \times L \times D)$$

were A is the maximum absorbance defined as peak height, E the molar extinction coefficient of the group in question ($l \cdot mol^{-1} \cdot mm^{-1}$), L the film thickness (mm) and D the density of the material ($g \cdot cm^{-1}$).

The total amount of C=C bonds per thousand total carbon atoms can be calculated through summation of N for the individual C=C containing components.

For polyethylene samples solid-state infrared spectra were recorded using a FTIR spectrometer (Perkin Elmer 2000) on compression moulded thin (0.5-1.0 mm) films at a resolution of 4 cm$^{-1}$ and analysed in absorption mode.

1) Polymer compositions comprising polyethylene homopolymers and copolymers, except polyethylene copolymers with > 0.4 wt% polar comonomer

For polyethylenes three types of C=C containing functional groups were quantified, each with a characteristic absorption and each calibrated to a different model compound resulting in individual extinction coefficients:

- vinyl (R-CH=CH2) via 910 cm$^{-1}$ based on 1-decene [dec-1-ene] giving E = 13.13 l·mol$^{-1}$·mm$^{-1}$
- vinylidene (RR'C=CH2) via 888 cm$^{-1}$ based on 2-methyl-1-heptene [2-methyhept-1-ene] giving E = 18.24 l·mol$^{-1}$·mm$^{-1}$
- trans-vinylene (R-CH=CH-R') via 965 cm$^{-1}$ based on trans-4-decene [(E)-dec-4-ene] giving E = 15.14 l·mol$^{-1}$·mm$^{-1}$

For polyethylene homopolymers or copolymers with < 0.4 wt% of polar comonomer linear baseline correction was applied between approximately 980 and 840 cm$^{-1}$.

2) Polymer compositions comprising polyethylene copolymers with > 0.4 wt% polar comonomer

For polyethylene copolymers with > 0.4 wt% of polar comonomer two types of C=C containing functional groups were quantified, each with a characteristic absorption and each calibrated to a different model compound resulting in individual extinction coefficients:

- vinyl (R-CH=CH2) via 910 cm$^{-1}$ based on 1-decene [dec-1-ene] giving E = 13.13 l·mol$^{-1}$·mm$^{-1}$
- vinylidene (RR'C=CH2) via 888 cm$^{-1}$ based on 2-methyl-1-heptene [2-methyl-hept-1-ene] giving E = 18.24 l·mol$^{-1}$·mm$^{-1}$

EBA:

For poly(ethylene-co-butylacrylate) (EBA) systems linear baseline correction was applied between approximately 920 and 870 cm$^{-1}$.

EMA:

For poly(ethylene-co-methylacrylate) (EMA) systems linear baseline correction was applied between approximately 930 and 870 cm$^{-1}$.

3) Polymer compositions comprising unsaturated low molecular weight molecules

For systems containing low molecular weight C=C containing species direct calibration using the molar extinction coefficient of the C=C absorption in the low molecular weight species itself was undertaken.

**DSC Method: The lamella thickness and the crystallinity determinations.**

The lamella thickness distribution is analysed according to the description below.
The melting curves and temperatures from a DSC (Differential Scanning Caliometry) analysis of 5 mg of sample obtained are used for calculating the lamella thickness distribution. For thermoplastic materials the DSC analysis cycle is as follows: a first heating from 30°C to 180°C at a rate of 10°C/min, then the sample is kept for 2 minutes at 180°C, before cooling from 180°C to -30°C at a rate of 10°C/min and then the sample is kept at -30°C for 2 min before the second heating from -30°C to 220°C at a rate of 10°C/min is done. For peroxide containing materials the DSC analysis cycle is as follows: a first heating from 30°C to 130°C at a rate of 10°C/min, then the sample is kept for 2 minutes at 130°C, before cooling from 130°C to -30°C at a rate of 10°C/min and then the sample is kept at -30°C for 2 min before the second heating from -30°C to 220°C at a rate of 10°C/min is done.
The lamella thickness for each melting temperature is calculated according to the Thompson-Gibbs equation:

$$T_m = T°_m(1 - 2\sigma_e / \Delta H°_m L_c)$$

Where $T°_m$ is equilibirum melting point for an infinite crystal, $\sigma_e$ is the specific surface free energy of the basal plane, and $\Delta H°_m$ is the enthalpy of melting per mass unit and they are all constants, $L_c$ is the lamella thickness and $T_m$ is the melting temperature of the lamella.

Parameters for lamella thickness calculations of Polyethylene

$$T°_m \; [m/K] \quad 415$$

$$\sigma_e \; [J/m^2] \quad 93 \times 10^{-3}$$

$$\Delta H°_m \; [J/m^3] \quad 300 \times 10^6$$

Reference J.A. Parker, D.C. Bassett, R.H. Olley, P. Jaaskelainen; On high pressure crystallization and the characterization of linear low-density polyethylenes; Polymer 1994, 35 (19), 4140-4145.

Using the values above, the equation for determining lamella thickness for PE using the Thompson-Gibbs equation will be:

$$L_c = 0.62 \times 10^{-9} \times 415 / (415 - T_m)$$

The melting temperature is given in Kelvin and the unit for lamella thickness is nm.

The lamella thickness distribution is calculated using the second heating cycle in the DSC analysis to ensure that the thermal history of the sample is taken away. The lamella thickness distribution is calculated in intervals of 1°C from -20°C to 220°C. For each temperature interval, which relates to certain lamella thickness interval according to the Thompson-Gibbs equation, the corresponding specific heat input $\Delta H_i$ is calculated from the DSC analysis. The weight fraction of crystals melting in a certain lamella thickness interval is calculated by dividing the $\Delta H_i$ with the total specific heat input for the melting of all crystals $\Delta H_{total}$.

From $\Delta H_{total}$, the crystallinity of the material can be determined: crystallinity [%] = 100 x $\Delta H_{total}$ / $\Delta H_{100\%}$ where $\Delta H_{100\%}$ (J/g) is 290.0 for PE (L.Mandelkem, Macromolecular Physics, Vol. 1-3,Academic Press, New York 1973,1976 &1980).

The result from this type of analysis is usually presented as a plot displaying the crystal fraction as a function of lamella thickness. This data can easily be used to determine the "crystal fraction with lamella thickness > 10 nm". Multiplying this fraction with the overall crystallinity of the material results in the overall "weight fraction crystals with lamella thickness > 10 nm".

The used properties determined with the DSC method:

In this context the above used definitions have the following meanings:

"Lamella thickness" = Thickness of crystal lamellas in the material (fractions* < 0.1 wt%) are ignored).

* Refer to crystal fractions of one degree Celsius intervals.

"Crystal fraction with lamella thickness > 10 nm" = Fraction of the crystals which have a thickness above 10 nm based on the amount of the crystallised part of the polymer

"Crystallinity" = wt % of the polymer that is crystalline

"Weight fraction of crystals with lamella thickness > 10 nm [wt%] " = Crystal fraction with lamella thickness > 10 nm" x "Crystallinity".

**DC Conductivity method**

The plaques are compression moulded from pellets of the test polymer composition. The final plaques have a thickness of 1 mm and 200 × 200 mm. The conductivity measurement can be performed using a test polymer composition which does not comprise or comprises the optional crosslinking agent. In case of no crosslinking agent, the conductivity is measured from a non-crosslinked plaque sample using the below procedure. If the test polymer composition comprises the crosslinking agent, then the crosslinking occurs during the preparation of the plaque samples, whereby the conductivity is then measured according to the below procedure from the resulting crosslinked plaque sample. Crosslinking agent, if present in the polymer composition prior to crosslinking, is preferably a peroxide, as herein.

The plaques are press-moulded at 130°C for 12 min while the pressure is gradually increased from 2 to 20 MPa. Thereafter the temperature is increased and reaches 180°C after 5 min. The temperature is then kept constant at 180°C for 15 min during which the plaque becomes fully crosslinked by means of the peroxide, if present in the test polymer composition. Finally the temperature is decreased using the cooling rate 15 °C/min until room temperature is reached when the pressure is released. The plaques are immediately after the pressure release wrapped in metallic foil in order to prevent loss of volatile substances.

If the plaque is to be degassed (i.e. if it is crosslinked) it is placed in a ventilated oven at atmospheric pressure for 24 h at 70°C. Thereafter the plaque is again wrapped in metallic foil in order to prevent further exchange of volatile substances between the plaque and the surrounding.

A high voltage source is connected to the upper electrode, to apply voltage over the test sample. The resulting current through the sample is measured with an electrometer. The measurement cell is a three electrodes system with brass electrodes. The brass electrodes are equipped with heating pipes connected to a heating circulator, to facilitate measurements at elevated temperature and provide uniform temperature of the test sample. The diameter of the measurement electrode is 100 mm. Silicone rubber skirts are placed between the brass electrode edges and the test sample, to avoid flashovers from the round edges of the electrodes.

The applied voltage was 30 kV DC meaning a mean electric field of 30 kV/mm. The temperature was 70°C. The current through the plaque was logged throughout the whole experiments lasting for 24 hours. The current after 24 hours was used to calculate the conductivity of the insulation.

This method and a schematic picture of the measurement setup for the conductivity measurements has been thoroughly described in a publication presented at the Nordic Insulation Symposium 2009 (Nord-IS 09), Gothenburg, Sweden, June 15-17, 2009, page 55-58: Olsson et al, "Experimental determination of DC conductivity for XLPE insulation".

**Experimental part**

The following materials are used in the examples:

Comparative LDPE 1 - an LDPE copolymer with octadiene of density 922 kg/m$^3$ and MFR$_2$ of 2.0 g/10 min.
LDPE 2 - An LDPE homopolymer having the properties of table 1:

Table 1:

| Base Resin Properties | LDPE |
|---|---|
| MFR$_2$, 190°C [g/10min] | 0.3 |
| Density [kg/m$^3$] | 930 |
| Tensile modulus | 350 MPa |
| Flex Modulus | 330 MPa |

Comparative LDPE3: a LDPE homopolymer of density 922 kg/m$^3$ and MFR$_2$ of 2 g/10 min.
The non crosslinked conductivity of the materials is measured in Table 2:

Table 2

| Components | Comp Ex 1 | Comp Ex 2 | Inv 1 |
|---|---|---|---|
| LDPE1 wt% | 100 | | |
| LDPE2 wt% | | | 100 |
| LDPE3 wt% | | 100 | |
| Crystallinity, % | 43 | 43 | 53 |
| Melting point, °C | 110 | 110 | 116 |
| DC conductivity, fS/m | 5.1 | 4.9 | 2.3 |

The tested materials are free of additives.

As can be seen from table 2, non-crosslinked LDPE of the inventive example shows excellent low DC conductivity (70°C, 30 kV/mm). Moreover, the LDPE has a very high melting point. Higher melting point is an advantage as it offers the possibility to increase the service temperature of HVDC cables leading to higher transmission capacity. The non-crosslinked LDPE of inventive example 1 has unexpectedly an industrially feasible DC conductivity. The non-crosslinked polymers of the invention are particularly preferable in DC power cables, preferably in HV DC power cables.

Moreover, it is clear that the inventive example has better conductivity than non crosslinked comp. example 1 and comp. example 2. The higher density leads therefore to improvements in conductivity.

**Claims**

1. A cable comprising one or more conductors surrounded by at least an inner semiconductive layer, an insulation layer and an outer semiconductive layer, in that order, wherein said insulation layer comprises an LDPE homopolymer or copolymer having a density of 927 to 940 kg/m$^3$ and wherein the conductivity of the LDPE is 5.0 fS/m or less when measured according to DC conductivity method as described under "Determination Methods".

2. A cable as claimed in claim 1 wherein the insulation layer is not cross-linked.

3. A cable as claimed in any preceding claim which is a power cable such as a direct current (DC) power cable.

4. A cable as claimed in any preceding claim which is a direct current (DC) power cable operating at or capable of operating at 650 kV or more.

5. A cable as claimed in any preceding claim in which the LDPE has an MFR$_2$ (2.16 kg, 190°C) of 0.1 to 10 g/10min, such as 0.1 to 2.0 g/10min.

6. A cable as claimed in any preceding claim in which the LDPE is a homopolymer.

7. A cable as claimed in any preceding claim in which the LDPE has a melting point of at least 112°C, such as at least 114°C.

8. A cable as claimed in any preceding claim in which the conductivity of the LDPE is 0.05 to 3.0 fS/m.

9. A cable as claimed in any preceding claim in which the LDPE has a density of 929 to 932 kg/m$^3$.

10. A cable as claimed in any preceding claim in which the insulation layer is not crosslinked, and wherein the LDPE is a homopolymer of density of 929 to 932 kg/m$^3$.

11. A cable as claimed in any preceding claim wherein the inner semiconductive layer is not cross-linked.

12. A cable as claimed in any preceding claim wherein the outer semiconductive layer is cross-linked.

13. A cable as claimed in any preceding claim wherein the insulation layer comprises 99 wt% or more of the LDPE.

**14.** A process for producing a cable as claimed in any preceding claim comprising the steps of:

- applying on one or more conductors, preferably by (co)extrusion, an inner semiconductive layer, an insulation layer and an outer semiconductive layer, in that order, wherein the insulation layer comprises wherein an LDPE homopolymer or copolymer having a density of 927 to 940 kg/m$^3$ and wherein the conductivity of the LDPE is 5.0 fS/m or less when measured according to DC conductivity method as described under "Determination Methods".

**15.** Use of an LDPE homopolymer or copolymer having a density of 927 to 940 kg/m$^3$ in the manufacture of an insulation layer in a cable, wherein the conductivity of the LDPE is 5.0 fS/m or less when measured according to DC conductivity method as described under "Determination Methods".

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/090640 A1 (BOREALIS AG [AT]) 25 June 2015 (2015-06-25) | 1,3-6,8, 11-15 | INV. H01B3/44 |
| A | * page 15, line 9 - page 22, line 20; claims 1-16; examples 1-17; tables 1-2 * | 9,10 | C08L23/06 C08L23/08 |
| | ----- | | |
| X | WO 2014/075727 A1 (ABB RESEARCH LTD [CH]) 22 May 2014 (2014-05-22) | 1-8, 11-15 | |
| A | * page 1 - page 14; claims 1-20; figure 8 * | 9,10 | |
| | ----- | | |
| X | WO 2011/128147 A1 (BOREALIS AG [AT]; NILSSON ULF [SE]; HAGSTRAND PER-OLA [SE]; ENGLUND VI) 20 October 2011 (2011-10-20) | 1-8, 11-15 | |
| A | * page 1, line 4 - page 40, line 25; claims 1-22; tables 1, 4 * | 9,10 | |
| | ----- | | |
| X | WO 2011/113686 A1 (BOREALIS AG [AT]; NILSSON ULF [SE]; HAGSTRAND PER-OLA [SE]; ENGLUND VI) 22 September 2011 (2011-09-22) | 1-8, 11-15 | |
| A | * page 1, line 4 - page 25, line 14; claims 1-19; tables 1,2 * * page 43, line 2 - page 46, line 16 * | 9,10 | |
| | ----- | | |

TECHNICAL FIELDS
SEARCHED       (IPC)

H01B
C08L

The present search report has been drawn up for all claims

| Place of search | Date of completion of the search | Examiner |
|---|---|---|
| Munich | 11 November 2016 | Marsitzky, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 5586

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2016

| Patent document cited in search report | | Publication date | Patent family member(s) | | Publication date |
|---|---|---|---|---|---|
| WO 2015090640 | A1 | 25-06-2015 | CA 2933710 A1 | | 25-06-2015 |
| | | | CN 105829424 A | | 03-08-2016 |
| | | | EP 3083796 A1 | | 26-10-2016 |
| | | | KR 20160119768 A | | 14-10-2016 |
| | | | US 2016319104 A1 | | 03-11-2016 |
| | | | WO 2015090640 A1 | | 25-06-2015 |
| WO 2014075727 | A1 | 22-05-2014 | NONE | | |
| WO 2011128147 | A1 | 20-10-2011 | BR 112012025926 A2 | | 28-06-2016 |
| | | | CN 102939331 A | | 20-02-2013 |
| | | | EP 2558523 A1 | | 20-02-2013 |
| | | | KR 20130057993 A | | 03-06-2013 |
| | | | US 2013199817 A1 | | 08-08-2013 |
| | | | WO 2011128147 A1 | | 20-10-2011 |
| WO 2011113686 | A1 | 22-09-2011 | CA 2792990 A1 | | 22-09-2011 |
| | | | CN 102947384 A | | 27-02-2013 |
| | | | EP 2547729 A1 | | 23-01-2013 |
| | | | KR 20130051928 A | | 21-05-2013 |
| | | | RU 2012142301 A | | 27-04-2014 |
| | | | US 2013087362 A1 | | 11-04-2013 |
| | | | WO 2011113686 A1 | | 22-09-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011113685 A

- WO 9308222 A

**Non-patent literature cited in the description**

- Encyclopedia of Polymer Science and Engineering. 1986, vol. 6, 383-410
- Polyethylene: High-pressure. **R.KLIMESCH ; D.LITTMANN ; F.-O. MÄHLING.** Encyclopedia of Materials: Science and Technology. Elsevier Science Ltd, 2001, 7181-7184
- **J. RANDALL.** *JMS - Rev. Macromol. Chem. Phys.,* 1989, vol. C29 (2&3), 201-317
- **A. J. BRANDOLINI ; D. D. HILLS.** NMR Spectra of Polymers and Polymer Additives. Marcel Dekker, Inc, 2000
- **S. BERGER ; S. BRAUN.** 200 and More NMR Experiments: A Practical Course. Wiley-VCH, 2004

- **J.A. PARKER ; D.C. BASSETT ; R.H. OLLEY ; P. JAASKELAINEN.** On high pressure crystallization and the characterization of linear low-density polyethylenes. *Polymer,* 1994, vol. 35 (19), 4140-4145
- **L.MANDELKEM.** Macromolecular Physics. Academic Press, 1973, vol. 1-3
- **OLSSON et al.** Experimental determination of DC conductivity for XLPE insulation. *Nordic Insulation Symposium 2009 (Nord-IS 09),* 15 June 2009, 55-58